# EUROPÄISCHE PATENTANMELDUNG

(11) **EP 0 726 127 A1**
(43) Veröffentlichungstag der Anmeldung: **14.08.1996**
(21) Anmeldenummer: 95119175.8
(22) Anmeldetag: 06.12.1995
(51) Int. Cl.: B29C 33/06, B29C 35/08

(54) **Formen zur Herstellung von geformten Artikeln aus Latexschaum mittels Mikrowellenenergie**

(30) Priorität: 02.02.1995 DE 19503240
(71) Anmelder: HÜLS AKTIENGESELLSCHAFT, D-45764 Marl (DE)
(72) Erfinder: Knipp, Herbert, D-45721 Haltern (DE); Sauer, Thomas, Dr., D-45721 Haltern (DE); Tessmann, Karl, D-45768 Marl (DE)

(57) **Zusammenfassung**

Herkömmliche nichtmetallische Formen zur Herstellung von geformten Latexschaumartikeln mittels Mikrowellenenergie sind infolge der starken mechanischen und thermischen Beanspruchungen in ihrer Nutzungsdauer deutlich eingeschränkt. Die hohen Anforderungen an die Wärmeformbeständigkeit lassen nur ausgewählte Kunststoffe als Formenmaterial zu. Durch den erfindungsgemäßen Einsatz konstruktiver Metallteile wird der Formenbau vereinfacht, die Wärmeformbeständigkeit erhöht und die Nutzungsdauer verbessert.

In den erfindungsgemäßen Formen (1,2) werden konstruktive Metallteile (4,5) bevorzugt auf der den Strahlungsquellen abgewandten Seite zur Versteifung oder als Verbindungselemente derart eingesetzt, daß eine gleichmäßige Einstrahlung in die Form ermöglicht und eine direkte Reflexion der Mikrowellenstrahlung in die Strahlungsquellen ohne vorherigen Durchgang durch ein absorbierendes Medium weitgehend vermieden wird.

Herstellen von geformten Latexschaumartikeln wie Matratzen oder Polster.

## Beschreibung

Die Erfindung betrifft Formen, die zur Gelierung und Vulkanisation von geformten Artikeln aus Latexschaum mittels Mikrowellenenergie geeignet sind.

Die Erfindung bezweckt, die Herstellung der Formen zu vereinfachen und damit wirtschaftlicher zu gestalten.

Die Herstellung von geformten Artikeln aus Latexschaum wie beispielsweise Matratzen und Polster erfolgt in herkömmlichen Produktionsverfahren in Metallformen, die mittels elektrischer Energie (Widerstandsheizung), einer Heizflüssigkeit oder mit Dampf beheizt werden. Die Form hat dabei neben der eigentlichen Formgebung für den geformten Latexschaumartikel insbesondere die wichtige zusätzliche Funktion, die Prozeßwärme in den zu vulkanisierenden Latexschaum zu übertragen. Aufgrund der geringen Wärmeleitfähigkeit des Latexschaums kommt daher der Formenkonstruktion und dem Formenmaterial insbesondere bei dickeren geformten Artikeln aus Latexschaum eine wesentliche Bedeutung als Wärmeübertrager zu.

Die Vulkanisation von Latexschaum auf der Basis von Mikrowellenenergie erfordert dagegen noch US 3 737 488 oder DE-OS 39 00 809 den Einsatz nichtleitfähiger und damit nichtmetallischer Formen, die im Bereich der Wellenlänge der Mikrowellenstrahlung weitestgehend transparent sind. Der Vorteil dieser Technologie liegt damit insbesondere darin, daß - einmal aufgeheizt - im wesentlichen keine Prozeßenergie zur Erhitzung und/oder Kühlung des Formenmaterials eingesetzt werden muß. Dies ist gleichbedeutend mit der Aussage, daß der Form und da Formenmaterial in diesem Prozeß keinerlei Funktion als Wärmeübertrager zukommt.

Begrenzt einsatzfähige, nichtmetallische Werkstoffe zur Herstellung solcher Formen sind beispielsweise Polytetrafluorethylen, Polyethylen oder Polypropylen. Sie verfügen zwar über die nötige Transparenz für Mikrowellenstrahlung und eine genügend niedrige Wärmeleitfähigkeit, jedoch ist ihre Wärmeformbeständigkeit unter den Bedingungen der Latexschaumvulkanisation unbefriedigend. Insbesondere große Formen aus diesen Werkstoffen, wie sie beispielsweise für die Herstellung von Latexmatratzen erforderlich sind, zeigen daher im Dauergebrauch eine völlig ungenügende Stabilität und Maßhaltigkeit. Andere, weitgehend Mikrowellen-transparente Polymerwerkstoffe mit erhöhter Wärmeformbeständigkeit wie Polycarbonat oder Polysulfon sind ebenfalls nur begrenzt einsetzbar, da sie eine starke Anfälligkeit für Spannungsrisse zeigen.

Die deutsche Patentanmeldung DE-OS 42 07 898 beschreibt eine Form aus modifizierten Werkstoffen auf der Basis von Polyphenylenethern, die nach entsprechender Oberflächenvorbehandlung geeignet ist zur Herstellung geformter Artikel aus Latexschaum mittels Mikrowellenenergie. Mit diesem Formenmaterial erhält man einen Kompromiß zwischen Transparenz gegenüber Mikrowellenstrahlung, geringer Wärmeleitfähigkeit und genügend hoher Wärmeformbeständigkeit.

Die Konstruktion nichtmetallischer Formen aus diesem und anderen Polymerwerkstoffen verwendet an sich bekannte und dem Fachmann geläufige Verklebungs- und Schweißtechniken, die aber sehr aufwendig in der Ausführung sind. Zudem sind Schweiß- und Klebnähte bekanntermaßen mechanische Schwachstellen, die beim längeren Gebrauch dieser Formen zum Versagen führen.

Die formbeständigeren Metalle sind jedoch als Behältnismaterial für Stoffe, die im Mikrowellenfeld behandelt werden, eher nicht geeignet. Sie reflektieren die Mikrowellenstrahlung nahezu vollständig und sind nicht transparent, so daß die Mikrowellenstrahlung in ein geschlossenes, metallisches Behältnis nicht eindringen kann. Es bedarf also in diesem Fall zumindest einer speziellen Einkopplung der Strahlung in ein solches geschlossenes Behältnis. Durch die Reflexion an einzelnen Metallteilen innerhalb des Mikrowellenapplikators wird weiterhin die gleichmäßige Verteilung der Strahlung im Mikrowellenfeld stark gestört, was zu einer ungleichmäßigen Erwärmung des thermisch zu behandelnden Gutes führt. Sie führt auch dazu, daß ein Großteil der Strahlungsenergie zurück in die Strahlungsquellen reflektiert wird, wodurch deren Lebensdauer stark vermindert wird. Ebenso können zwischen Metallteilen im Mikrowellenfeld und der Wandung des Mikrowellenapparates Funken überschlagen, die einen sicheren Betrieb eines solchen Gerätes verhindern.

Es ist zwar auch bekannt (siehe G. Nimtz, Mikrowellen, BI Wissenschaftsverlag, Mannheim 1990), daß die Mikrowellenenergie an der Oberfläche von Metallen teilweise absorbiert wird. Die Eindringtiefe der Strahlung beträgt typischerweise einige Mikrometer. Metallische Gegenstände, die ein großes Verhältnis von Oberfläche zur Masse haben, d.h. insbesondere dünne Metallteile wie Filme, Folien und Drähte, können sich daher im Mikrowellenfeld sehr stark aufheizen. Von diesem Effekt wird beispielsweise in GB 2 046 060 Gebrauch gemacht, um eine gezielte lokale Erhitzung von Behältnissen für die Erwärmung von Nahrungsmitteln zu erreichen. Wegen der schwierigen Abgrenzung hinsichtlich noch geeigneter Metallteile und der möglichen Unfallgefahren durch Funkenschlag empfehlen die Hersteller von Mikrowellengeräten jedoch eindringlich, keine metallischen Behältnisse oder solche mit Metallteilen in das Mikrowellenfeld einzubringen.

Für eine Herstellung von geformten Latexschaumartikeln in metallischen Formen mittels Mikrowellenenergie wäre zudem die Erhitzung der Formen oder von Teilen davon wegen der zusätzlichen Energiekosten völlig unnötig und unerwünscht. Lokale Überhitzungen des Formenmaterials und gegebenenfalls Funkenüberschlag im Mikrowellenapplikator würden weiterhin zu einer unzulässigen Beeinträchtigung der Betriebssicherheit im Hinblick auf die bekanntermaßen hohe Brandgefahr von Latexschaumartikeln führen. Zudem würde eine Ungleichmäßigkeit in der Strahlungsverteilung im Feld zu ungleichmäßig vulkanisierten geformten Latexschaumartikeln führen, die keinen Gebrauchswert haben. Für die Herstellung von geformten Latexschaumartikeln mittels Mikrowellenenergie werden in der Praxis daher gänzlich nichtmetallische Formen verwendet, deren Haltbarkeit und Nutzungsdauer aber zu wünschen übrig läßt.

Aufgabe der vorliegenden Erfindung ist daher, Formen zur Herstellung von geformten Artikeln aus Latexschaum mittels Mikrowellenenergie zu entwickeln, die einfach und kostengünstig hergestellt werden können und die eine hohe Wärmeformbeständigkeit und Nutzungsdauer haben.

Überraschenderweise wurde gefunden, daß konstruktive Metallteile In Kunststofformen zur Herstellung von geformten Artikeln aus Latexschaum mittels Mikrowellenenergie den Vulkanisationsprozeß und den Betrieb des Mikrowellengerätes nicht stören, wenn sie erfindungsgemäß eingesetzt werden.

Gegenstand der Erfindung sind daher Formen zur Gelierung und Vulkanisation von geformten Artikeln aus Latexschaum mittels Mikrowellenenergie, die dadurch gekennzeichnet sind, daß zu ihrer Fertigung neben Mikrowellen-transparenten Kunststoffteilen konstruktive Elemente aus Metall solcherart eingesetzt werden, daß eine gleichmäßige Einstrahlung der Mikrowellenenergie in diese Formen ermöglicht und eine direkte Reflexion der Mikrowellenstrahlung zurück in die Strahlungsquellen ohne vorherigen Durchgang durch ein absorbierendes Medium weitestgehend vermieden wird.

Erfolgt also beispielsweise die Einstrahlung der Mikrowellen in die Form von oben, so sind die konstruktiven Metallteile erfindungsgemäß in wesentlichen im Seiten- und/oder im Bodenbereich der Formen angeordnet. Insbesondere bei den im Boden der Formen verwendeten Metallteilen ist dann die auftreffende Mikrowellenstrahlung durch die Absorption im vorgelegten Schaum bereits deutlich geschwächt. Der verbleibende, größtenteils reflektierte Teil der Strahlung kann direkt nicht ohne vorherigen erneuten Durchtritt durch den absorbierenden, vorgelegten Schaum zur Strahlungsquelle gelangen. Die so weiter geschwächte einfallende Mikrowellenstrahlung beeinträchtigt die Nutzungsdauer der Strahlungsquelle nicht. Gleiches gilt für die nicht direkt, aber indirekt zurück in die Strahlungsquelle reflektierte Strahlung, da auch sie infolge mehrfacher Reflexion und Absorption stark an Intensität verliert. Erfolgt die Bestrahlung nicht von oben, so sind die konstruktiven Metallteile erfindungsgemäß bevorzugt auf der der Strahlungsquelle abgewandten Seite der Form angeordnet.

Konstruktive Metallteile im Sinne der Erfindung sind insbesondere Schrauben und ähnliche Verbindungselemente, Beschläge, Verschlüsse, Scharniere, Rahmen, Verstrebungen, Platten, Stäbe und ähnliche Elemente. Metallteile dieser Art dienen erfindungsgemäß nur als Konstruktionshilfen und haben im Gegensatz zur Vulkanisation mit z. B. Heißdampf in entsprechenden Metallformen keinerlei Funktion als Wärmeübertrager.

Bevorzugt werden die konstruktiven Metallteile zur Verbindung oder Verstärkung von Formteilen aus Mikrowellen-transparenten Kunststoffen eingesetzt. Sie kommen dabei vorzugsweise nicht unmittelbar mit dem Latexschaum in Berührung. In Weiterführung des Erfindungsgedankens können aber auch z. B. massive metallische Platten direkt als Formenboden oder als versteifende Unterlage für den Formenboden bei Einstrahlung der Mikrowellenenergie von oben eingesetzt werden.

Üblicherweise erfolgt die Herstellung von geformten Artikeln aus Latexschaum mittels Mikrowellenenergie mit Mikrowellen, die eine Frequenz zwischen 1 GHz und 100 GHz, bevorzugt 2 GHz bis 25 GHz, haben, bei Temperaturen bis 100 °C.

Ist die Steifigkeit und Wärmeformbeständigkeit von Formen aus einem Kunststoff, der z. B. wegen der geringen Haftungsneigung von Latexschaum zum Formenbau sehr geeignet wäre, bei diesen Prozeßtemperaturen zu gering, so kann durch den Einsatz konstruktiver metallischer Elemente die Stabilität, Verwindungssteifigkeit und Maßhaltigkeit der Formen nachhaltig verbessert werden. Insbesondere ermöglicht eine solche Konstruktion die Verwendung von Kunststoffen wie beispielsweise Polytetrafluorethylen, Polyethylen oder Polypropylen als Formenmaterial, die alleine in großflächigen Elementen unter den Bedingungen der Latexvulkanisation gamäß dem Stand der Technik keine ausreichende Wärmeformbeständigkeit haben. Durch eine erfindungsgemäße Konstruktion von Formen unter Verwendung metallischer Versteifungselemente können aber die vorteilhaften Eigenschaften auch dieser Kunststoffe uneingeschränkt genutzt werden. Dazu gehört insbesondere die geringe Haftungsneigung von Latexschaum an solchen Kunststoffen, wodurch das Entformen vulkanisierter geformter Latexschaumartikel erheblich erleichtert wird. Dazu gehören aber insbesondere auch die relativ niedrigen Materialkosten und die gute Verarbeitbarkeit von z. B. Polypropylen und Polyethylen.

Als absorbierendes Medium für die reflektierte Strahlung dient bevorzugt der zur Vulkanisation in die Form vorgelegte Schaum bestehend aus Luft, Latex und weiteren Verarbeitungshilfsmitteln und darin insbesondere der noch enthaltene Anteil an Wasser. Typische Zusammensetzungen solcher Schäume werden beispielsweise in DE 21 50 872 beschrieben. Aufgrund des hohen Absorptionsvermögens des feuchten Schaumcompounds wird - bei Bestrahlung von oben - von unten bzw. von der Seite her reflektierte Strahlung weitestgehend absorbiert und somit die Reflexion in die Strahlungsquelle (nahezu) vermieden. Ein noch verbleibender, durch die Metallteile direkt nach oben zurück reflektierter Strahlungsanteil kann weiterhin durch bauliche Maßnahmen am Mikrowellenapplikator so abgelenkt werden, daß die Strahlungsquellen keinen Schaden nehmen. Zur Vermeidung von Reflexion und insbesondere Funkenüberschlag zwischen einzelnen Metallteilen können diese zusätzlich mit isolierendem Material umhüllt bzw. gekapselt oder abgeschirmt sein.

Der erfindungsgemäße Einsatz von metallischen Bauelementen sieht ferner vor, daß diese Elemente in ausreichender Materialstärke eingesetzt werden, so daß keine zu starke Erwärmung im Mikrowellenfeld auftritt. Die jeweils erforderlichen Mindestdimensionen der Metallteile sind dabei von der installierten Strahlungsleistung im jeweiligen Applikator abhängig. In der Regel liegen aber geeignete, handelsübliche Verbindungselemente und andere konstruktive Teile aus Metall bereits aus Gründen der mechanischen Belastbarkeit in solchen Materialstärken und Dimensionen vor, daß bei erfindungsgemäßem Gebrauch keine Beeinträchtigungen im Mikrowellenfeld zu erwarten sind. Die Eignung bestimmter Teile kann im Einzelfalle an Modellen oder fertigen Formen im Mikrowellenapplikator in Vorversuchen untersucht werden. Auch bei einer gegebenenfalls vorhandenen absorbierenden Umhüllung/Abschirmung der Metallteile kann durch eine geeignete Ausführung eine lokale Überhitzung vermieden werden.

Weiterhin hat der erfindungsgemäße Einsatz von Metalltellen zur Folge, daß insbesondere Konstruktionen mit spitz zulaufenden Metallteilen, an denen sich hohe Feldstärken aufbauen können, nicht eingesetzt werden, um Funkenüberschläge im laufenden Betrieb zu vermeiden.

Werden alle diese Kriterien für die eingesetzten Metallteile berücksichtigt, so tritt im laufenden Betrieb weder eine unzulässig hohe Erwärmung derselben auf noch wird die Prozeß- und Betriebssicherheit beeinträchtigt.

Als Material für die konstruktiven Metallteile für die erfindungsgemäßen Formen kommen alle gängigen Metallwerkstoffe mit ausreichender mechanischer Festigkeit in Frage. Bevorzugt werden aber solche metallischen Werkstoffe eingesetzt, die eine hohe Verfügbarkeit und einfache Verarbeitbarkeit besitzen und mit denen die Formenkonstruktion in erfindungsgemäßer Weise möglichst wirtschaftlich durchgeführt werden kann. Dabei ist ebenfalls Augenmerk auf einen ausreichenden Korrosionsschutz zu legen. Besonders geeignet sind daher rostfreie Stähle und Aluminium.

Die erfindungsgemäßen Formen können insbesondere im Formen inneren weitere Einbauten haben. Im Sinne der Erfindung können dort insbesondere Stutz- und Distanzbolzen eingesetzt werden, die einen exakten Abstand zwischen Boden und Deckel der Form gewährleisten. Als weitere Einbauten werden vielfach alle Arten von Verdrängungskörpern eingesetzt, die zu einer entsprechenden Profilierung und Formgebung der vulkanisierten Artikel führen. Einbauten dieser Art sind jedoch für die Einsatzfähigkeit der erfindungsgemäßen Formen ohne jegliche Bedeutung, da sie rein gestalterischen Zwecken dienen, aber bei der Vulkanisation mittels Mikrowellenenergie keinerlei Funktion als Wärmeübertrager haben. Da die Verdrängungskörper keine wesentliche mechanische Belastung erfahren, werden diese bevorzugt aus einem Kunststoff hergestellt. Diese Verdrängungskörper können aber erfindungsgemäß mittels metallischer Verbindungselemente an der Form befestigt werden.

Die erfindungsgemäßen Formen können in aller Regel nie herkömmliche, nichtmetallische Formen in den aus dem Stand der Technik bekannten Verfahren zur Herstellung von geformten Latexschaumartikeln mittels Mikrowellenenergie eingesetzt werden und bieten dabei folgende Vorteile:
- Durch den Einsatz konstruktiver Metallteile wird die Herstellung der Formen und damit der ganze Produktionsprozeß für geformte Latexschaumartikel mittels Mikrowellenenergie erheblich vereinfacht und verbilligt.
- Die erfindungsgemäßen Formen besitzen eine größere Haltbarkeit als die bisher verwendeten reinen Kunststofformen. Dadurch wird die Nutzungsdauer und damit die Wirtschaftlichkeit des Verfahrens deutlich erhöht.
- Neben den bislang gebräuchlichen Kunststoffen zur Formenherstellung ist durch die konstruktive Möglichkeit zur Versteifung der Formen durch Metallteile eine größere Auswahl an polymeren Werkstoffen für den Formenbau einsetzbar, wodurch eine erheblich höhere Flexibilität erreicht wird.
- Die Konstruktion der Formen wird erheblich vereinfacht. Die in der Kunststofftechnik üblichen aufwendigen Schweiß- und Verklebungstechniken zur Verbindung von Formteilen können zumindest teilweise durch einfachere Verbindungstechniken, wie z. B. metallische Schraubverbindungen, ersetzt werden.
- Auftretende Schäden an den erfindungsgemäßen Formen können oft ohne wesentliche Beeinträchtigung des Produktionsprozesses schnell repariert werden.
- Es werden in aller Regel handelsübliche Metallteile für den Formenbau verwendet.
- Die Handhabbarkeit der Formen wird verbessert.
- Die Betriebssicherheit bleibt gewahrt, da Funkenschlag und lokale Überhitzung nicht auftreten.

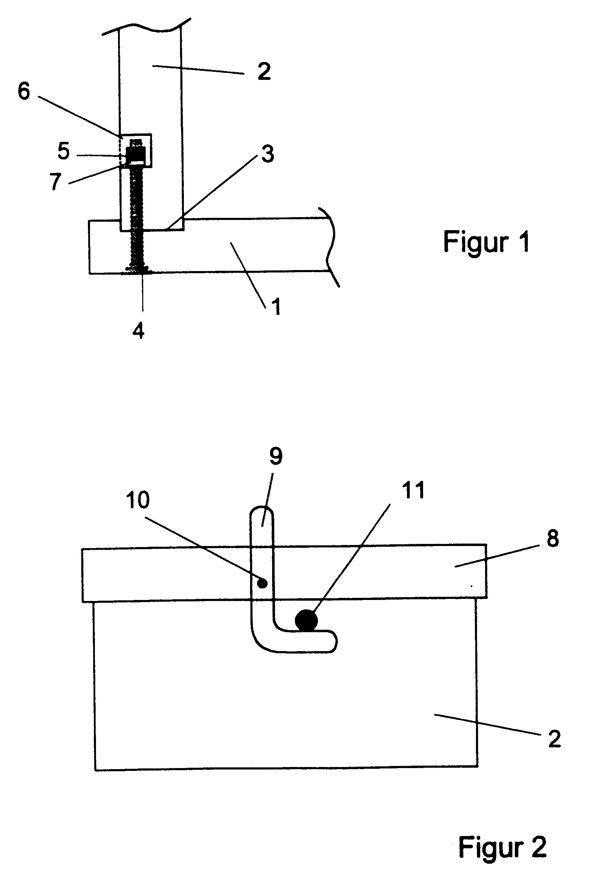

Die erfindungsgemäßen Formen werden anhand der Figuren 1 bis 3 näher erläutert.

In Figur 1 ist eine geeignete Konstruktionsvariante gezeigt, in der eine Seitenwandung 2 an einer Bodenplatte 1 befestigt ist. Die Bodenplatte ist mit einer passenden Nut 3 versehen, die als Fuhrung für die Seitenwandung 2 dient. Beide Elemente sind verschraubt mittels einer Gewindeschraube 4 und einer dazu passenden Gewindemutter 5 aus Metall. Bodenplatte 1 und Seitenwandung 2 enthalten eine jeweils passende Bohrung zur Aufnahme der Gewindeschraube 4. Die Seitenwandung 2 enthält zusätzlich eine Aussparung 6 zur seitlichen Aufnahme der Gewindemutter 5, die so plaziert ist, daß sie sich am Austritt der Führungsbohrung zur Aufnahme der Gewindeschraube 4 befindet. Die Gewindemutter 5 kann zusätzlich mit einer dauerelastischen Unterlage 7 unterlegt werden. Diese Unterlage dient dem Abfangen von Spannungen, die durch die unterschiedliche Wärmeausdehnung von Formenmaterial und Verschraubung auftreten. Sie verhindert, daß im Dauerbetrieb der Formen Spannungsrisse an den Verschraubungsstellen auftreten. Die Unterlage besteht zweckmäßigerweise aus einem Mikrowellen-transparenten Elastomer mit Dauergebrauchstemperaturen über 100 °C. Durch Zusammenfügen von Bodenplatte 1 und Seitenwandung 2 in gezeigter Weise und mehrmaligem Verschrauben mittels Gewindeschraube 4 und -mutter 5 sowie Unterlage 7 in geeignetem Abstand zueinander können somit auch großformatige Kunststoffteile einfach und dauerhaft befestigt werden. Durch Weiterführung dieses Konstruktionsprinzips können somit ganze Formen zur Vulkanisation von Latexschaum hergestellt werden. Verbindungen dieser Art können mit einfachem handwerklichen Geschick hergestellt und bei Bedarf auch schnell erneuert oder ausgebessert werden. Andere Verbindungskonstruktionen unter Verwendung metallischer Verbindungselemente können unter Zugrundelegung der gleichen Prinzipien in analoger Weise ausgeführt werden.

In gleicher Weise können weitere metallische Verbindungselemente, Beschläge, Verschlüsse, Scharniere und ähnliche Elemente angebracht werden, die die Konstruktion der Form erleichtern und deren Handhabbarkeit und Haltbarkeit im Dauergebrauch verbessern. Insbesondere empfiehlt sich der Gebrauch von metallischen Konstruktionselementen gegenüber entsprechenden Teilen aus Kunststoff, wenn diese nicht in einfacher Weise konstruiert werden können oder den mechanischen Beanspruchungen des ständigen Gebrauches der Form nicht genügen.

Typische Elemente mit hoher mechanischer Dauerbeanspruchung im laufenden Betrieb sind beispielsweise Verschlußmechanismen, die eine Fixierung des Formendeckels auf der Formenwanne bewerkstelligen. Ein solcher Mechanismus kann beispielsweise, wie in Figur 2 skizziert, in einfacher Weise aus Metall im Einklang mit den Erfordernissen der Vulkanisation im Mikrowellenfeld konstruiert werden. Der Formendeckel 8, der auf die Seitenwandung 2 der Formenwanne aufgelegt ist, ist mit einem Verschlußhaken 9 ausgestattet, der um die Achse 10 drehbar am Deckel 8 befestigt ist. Nach Auflegen des Deckels 8 auf die Formenwanne 2 wird der Verschlußhaken 9 so verdreht, daß der untere Teil in einen an der Seitenwandung 2 befestigten Bolzen 11 greift und somit den Deckel auf der Formenwanne fixiert. Die konstruktiven Elemente 9, 10 und 11 bestehen erfindungsgemäß aus Metall. Mehrere solcher Verschlüsse im geeigneten Abstand zueinander gewährleisten eine feste Arretierung des Formendeckels während der Befüllung der erfindungsgemäßen Form und der anschließenden Vulkanisation.

Weitere konstruktive Elemente mit hoher mechanischer Beanspruchung sind beispielsweise Scharniere, mit denen der Deckel an einer Seite der Formenwanne befestigt sein kann. Auch hier werden erfindungsgemäß vorzugsweise Metallscharniere eingesetzt.

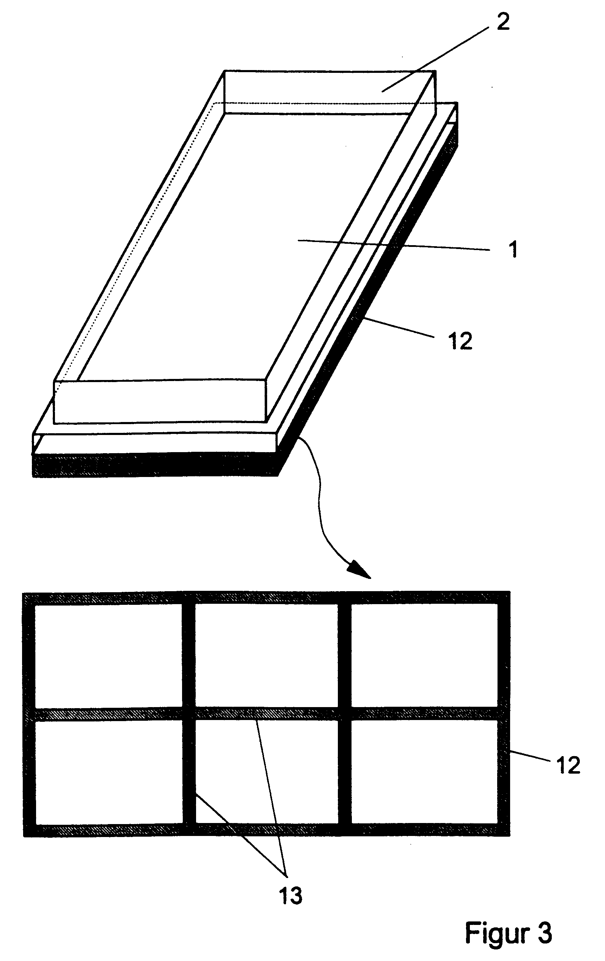

Eine versteifte Konstruktion ist in Figur 3 illustriert. Eine Formenwanne aus Kunststoff bestehend aus Formenboden 1 und Seitenteilen 2 wird auf einen versteifenden Metallrahmen 12 aufgebracht, der weitere Verstrebungen 13 enthält. Die Abstände zwischen den Streben 12 und 13 der Rahmenkonstruktion sind dabei so bemessen, daß der dazwischen freiaufliegende Flächenanteil des Formenbodens 1 sich im Dauergebrauch gerade nicht verzieht und nicht verwindet. Dies ist vom Material des Formenbedens und der Materialstärke abhängig und kann in einfacher Weise durch Versuche ermittelt werden. Die Formenwanne bestehend aus Formenboden 1 und Seitenteilen 2 wird solcherart auf der Rahmenkonstruktion 12 und 13 befestigt, daß ein fester Verbund entsteht, der sich im Dauergebrauch der Form nicht voneinander trennt, und daß die unterschiedlichen Wärmeausdehnungen von Formen- und Rahmenmaterial nicht zu inneren Verwerfungen des Formenbedens 1 und damit der ganzen Form führen. Dies kann beispielsweise so geschehen, daß der äußere Rahmen 12 den Formenboden ganz oder teilweise in Form eines U-Profils einschließt und eine entsprechende Maßdifferenz zwischen Formenboden 1 und Metallrahmen 12 eine ungehinderte Wärmeausdehnung des Bodens 1 gestattet. Dies kann aber auch so geschehen, daß der Boden 1 und der Rahmen 12 mit den Verstrebungen 13 zentral aneinander befestigt sind und zu allen Seiten hin weitere Verbindungspunkte angebracht sind, die kleine laterale Verschiebungen gegeneinander erlauben.

Die Konstruktion des Rahmens sollte so erfolgen, daß ein In-Sich-Verwinden bei laufenden Temperaturwechseln im Betrieb nicht stattfindet. Versteifende Konstruktionen dieser Art verleihen der Form insgesamt eine dauerhafte Stabilität und Maßhaltigkeit, die den Gebrauchswert solcher Formen erheblich steigern. Bei der Konstruktion solcher Formen müssen die obengenannten Bedingungen für den Einsatz von Metallteilen im Mikrowellenfeld erfüllt sein. Soweit solche Rahmenkonstruktionen im Bodenbereich eingesetzt werden, wird die dort auftretende Reflexion von Mikrowellenstrahlung weitestgehend im zu vulkanisierenden Latexschaum abgefangen.

In Weiterführung dieses Gedankens können selbst massive metallische Bodenplatten dem Formenboden 1 unterlegt werden bzw. der Formenboden 1 direkt aus einer massiven Metallplatte hergestellt werden. Die dann auftretende Reflexion der Mikrowellenstrahlung am Formenboden wird beim Durchgang durch den zu vulkanisierenden Latexschaum weitgehend absorbiert. Auch solche Formen können daher problemlos zur Vulkanisation von geformten Artikeln aus Latexschaum im Mikrowellenfeld herangezogen werden.

Die in der detaillierten Beschreibung illustrierten Konstruktionen haben im Sinne der Erfindung exemplarischen Charakter und limitieren insofern die Erfindung nicht. Dem Fachmann erschließen sich daraus eine Reihe weiterer Detailkonstruktionen, die ebenfalls erfindungsgemäß sind. Auch wird durch diese Erfindung der Einsatz der Formen nicht auf die Herstellung von Matratzen limitiert. Die erfindungsgemäßen Formen können ebenfalls zur Herstellung beliebiger anderer geformter Artikel aus vulkanisiertem Latexschaum mittels Mikrowellenenergie in analoger Weise eingesetzt werden. Bevorzugtes Einsatzgebiet für die Mikrowellenenergie bei der Herstellung von geformten Latexschaumartikeln ist allerdings das Gelieren und Vulkanisieren voluminöser Schaumstoffartikel.

## Patentansprüche

1. Formen zur Gelierung und Vulkanisation von geformten Artikeln aus Latexschaum mittels Mikrowellenenergie,
gekennzeichnet durch
weitgehend Mikrowellen-transparente Kunststoffteile und konstruktive Elemente aus Metall.

2. Formen gemäß Anspruch 1,
gekennzeichnet durch
konstruktive Metallelemente auf der den Strahlungsquellen abgewandten Seite und/oder in den Seitenteilen der Form.

3. Formen gemäß Anspruch 1 oder 2,
gekennzeichnet durch
metallische Verbindungselemente, Beschläge, Verschlüsse und/oder Scharniere zur gegenseitigen Befestigung von Kunststoffelementen zumindest für Böden, Seiten oder Deckel der Formen.

4. Formen gemäß Anspruch 3,
gekennzeichnet durch
dauerelastische Dämpfungselemente zwischen Formteilen und konstruktiven Elementen aus Metall.

5. Formen gemäß Anspruch 4,
gekennzeichnet durch
dauerelastische Mikrowellen-transparente Dämpfungselemente zwischen Formteilen und konstruktiven Elementen aus Metall.

6. Formen nach einem der Ansprüche 1 bis 5,
gekennzeichnet durch
Verstrebungen bzw. Versteifungen aus metallischen Konstruktionsteilen.

7. Formen gemäß Anspruch 2,
dadurch gekennzeichnet,
daß einzelne Formteile auf der den Strahlungsquellen abgewandten Seite aus Metall bestehen.

8. Verwendung einer Form gemäß Anspruch 1 zur Herstellung von Matratzen oder Polstern.

9. Verfahren zur Herstellung von geformten Artikeln aus Latexschaum,
dadurch gekennzeichnet,
daß eine Form nach einem der Ansprüche 1 bis 7 mit einem Latex-Schlagschaum gefüllt wird, der Vulkanisier-, Gelier- und Verarbeitungsmittel enthalten kann, und daß der Schaum durch Mikrowelleneinstrahlung geliert und vulkanisiert wird.
